# EUROPEAN PATENT APPLICATION

(11) **EP 4 089 596 A1**
(43) Date of publication of application: **16.11.2022**
(21) Application number: 21738032.8
(22) Date of filing: 04.01.2021
(51) Int. Cl.: G06Q 10/02, G06Q 50/12

(54) **INFORMATION PROCESSING DEVICE, INFORMATION PROCESSING METHOD, AND PROGRAM**

(30) Priority: 06.01.2020 JP 2020000515
(71) Applicant: TradFit Co., Ltd., Tokyo 100-0005 (JP)
(72) Inventor: TODA, Yoshiki, Chiyoda-ku, Tokyo 100-0005 (JP)
(74) Representative: Cabinet Beaumont
(86) International application number: PCT/JP2021/000026
(87) International publication number: WO 2021/141005

(57) **Abstract**

An information processing device (1) is characterized by comprising: a storage that stores information on a plurality of lodging facilities; an acquisition unit that acquires, for a user who has already booked one of the lodging facilities or is currently staying at said one of the lodging facilities, information used for determining whether or not another one of the lodging facilities is to be proposed; a determination unit that determines whether or not said another one of the lodging facilities is to be proposed to the user based on the information acquired; and an output unit that outputs information on said another one of the lodging facilities different from said one of the lodging facilities with reference to the storage in a case where it is determined that said another lodging facility is to be proposed.

## Description

### [Technical Field]

The present invention relates to an information processing device, an information processing method and a program.

### [Background Art]

Various systems for supporting a reservation application for a lodging facility have been proposed. Patent Document 1, for example, discloses a reservation proxy system for selecting a lodging facility based on a positional relation between the position information of a user obtained from his or her mobile terminal and the location of a lodging facility, presenting the lodging facility to the user and accepting a reservation application therefor.

### [Prior Art Document]

### [Patent Document]

[Patent Document 1] Japanese Patent Application Laid-Open No. 2011-53758

### [Summary of Invention]

### [Problems to be Solved by Application]

The invention according to Patent Document 1, however, merely presents a lodging facility depending on the position information to the user and has not yet been able to transfer the user to another lodging facility by taking into consideration a lodging facility already reserved by the user or a lodging facility where the user is staying.

According to one aspect, an object is to provide an information processing device and the like that is able to transfer a guest between lodging facilities.

### [Means for Solving Problems]

An information processing device according to one aspect comprises: a storage that stores information on a plurality of lodging facilities; an acquisition unit that acquires, for a user who has already booked one of the lodging facilities or is currently staying at said one of the lodging facilities, information used for determining whether or not another one of the lodging facilities is to be proposed; a determination unit that determines whether or not said another one of the lodging facilities is to be proposed to the user based on the information acquired; and an output unit that outputs information on said another one of the lodging facilities different from said one of the lodging facilities with reference to the storage in a case where it is determined that said another lodging facility is to be proposed.

### [Effects of Invention]

In one aspect, a guest can be transferred between lodging facilities.

### [Brief Description of Drawings]

FIG. 1 is a schematic view illustrating an example of the configuration of a guest transfer system.
FIG. 2 is a block diagram illustrating an example of the configuration of a server.
FIG. 3 is an explanatory view illustrating an example of the record layouts of a group DB, a speaker DB and a lodging management DB.
FIG. 4 is a block diagram illustrating an example of the configuration of a speaker.
FIG. 5 is an explanatory view illustrating an outline of Embodiment 1.
FIG. 6 is an explanatory view illustrating an example of a map image of lodging facilities.
FIG. 7 is a flowchart showing an example of the processing procedure executed by the server.
FIG. 8 is an explanatory view illustrating an outline of Embodiment 2.
FIG. 9 is a flowchart showing an example of the processing procedure executed by a server according to Embodiment 2.

### [Mode for Carrying out Invention]

Hereinafter, the present invention will be described in detail based on the drawings showing embodiments thereof.

### Embodiment 1

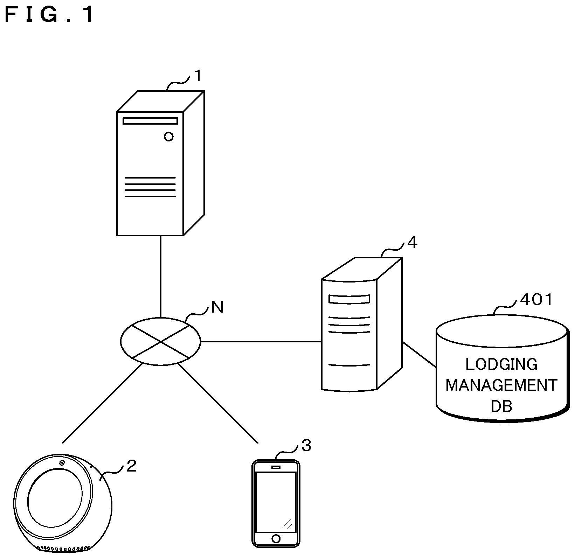

FIG. 1 is a schematic view illustrating an example of the configuration of a guest transfer system. In the present embodiment, a guest transfer system is described that recommends (proposes) another lodging facility to a user who has already booked one lodging facility or who is currently staying at one lodging facility, and accepts his or her booking with the lodging facility. The guest transfer system includes an information processing device 1, a speaker 2, a terminal 3 and a management server 4 and the like. These devices are connected to a network N such as the Internet. Though the lodging facility is described taking a hotel as an example in the present embodiment, it may be a private lodging or the like.

The information processing device 1 is an information processing device capable of performing various kinds of information processing as well as information transmission and reception, and is a server computer or a personal computer, for example. In the present embodiment, the information processing device 1 is assumed as a server computer and will be read as a server 1 for the sake of simplicity in the following. The server 1 performs processing related to transfer of a user, to recommend another lodging facility to the user and to accept booking with the lodging facility.

In the present system, multiple lodging facilities cooperate with each other, and a speaker 2 is installed at a guest room of each of the lodging facilities. The speaker 2 is a user interface installed in the guest room of a lodging facility and is an AI speaker having a voice input-output function, a screen display function and the like.

Though an AI speaker is taken as an example of the user interface in the present embodiment, the user interface installed in the guest room may be a tablet terminal or a personal computer, for example, not limited to the AI speaker. Though voice input-output is described as an example due to the AI speaker being taken in the present embodiment, the input-output means through the user interface is not limited to the voice input-output means but may be input-output means of receiving input of text through a screen (touch panel), a keyboard or the like and outputting the text on the screen. An example of the voice input-output means may be a system in which a television-type terminal or a television is connected with an AI speaker. Alternatively, the input-output means may be a means for inputting text using brain waves, an input means using gesture, an input means using myogenic potential or the like, for example, not limited to means using voice or a screen. In other words, the present invention is not limited to certain devices and input means.

While communicating with the server 1 as needed, the speaker 2 provides the user with information related to the lodging facility (information on room service or hotel amenities, information on neighboring regions of the lodging facility, for example) and accepts input of information (order of room service or amenities, reservation at a neighboring restaurant, for example) from the user by voice or the like. In the present embodiment, using the speaker 2 installed in the guest room, another lodging facility is proposed to the user who is staying in the lodging facility for guest transfer.

More specifically, multiple lodging facilities affiliated in the present system are combined into groups by a predetermined unit of groups (for each hotel chain, for example). The server 1 proposes a lodging facility that belongs to the same group as the lodging facility where the user is staying. Note that a lodging facility in a different group (different hotel chain) may be proposed instead of a lodging facility in the same group. Alternatively, the unit of groups may depend on the location of the lodging facilities, for example, instead of the owner of the lodging facilities (hotel chain). The server 1 thus transfers a guest between groups to thereby improve the occupancy rate of the lodging facilities.

The terminal 3 is an information processing terminal held by each user and is a smartphone, a tablet terminal or a personal computer, for example. Though information is basically input and output via the speaker 2 in the present embodiment, the server 1 may perform input and output of information via the terminal 3.

Though another lodging facility is proposed to a user who is staying in a lodging facility in the present embodiment, another lodging facility may be proposed to a user who has already booked a lodging facility but has not yet stayed in the lodging facility (immediately after booking one lodging facility through the Web site, for example) as will be described below. In this case, the server 1 may perform input and output of information via the terminal 3, not the speaker 2.

The management server 4 is a server computer for managing a lodging facility, and is related to a Property Management System (PMS), for example. The PMS, for example, is a system for centrally controlling reservation management for a lodging facility, payment, management of guest rooms, management of guest information and the like and is introduced to each lodging facility or to each group consisting of multiple lodging facilities (each hotel chain, for example). The management server 4 records various types of information including guest information in a lodging management DB 401. The server 1 acquires attribute information and the like of the user from the management server 4.

Though the server 1 that proposes a lodging facility via the speaker 2 and the management server 4 that manages information on lodging facilities are described as separate devices, the server 1 may also function as the management server 4 to centrally perform the management of the lodging facilities as well.

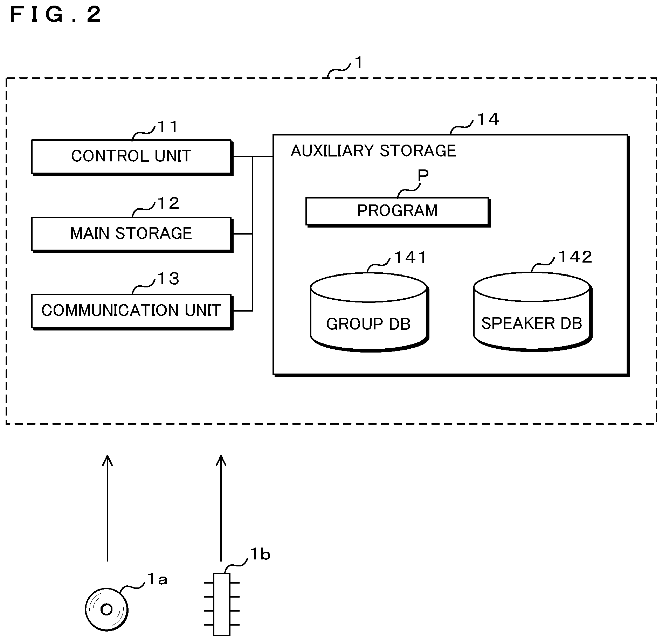

FIG. 2 is a block diagram illustrating an example of the configuration of the server 1. The server 1 is provided with a control unit 11, a main storage 12, a communication unit 13 and an auxiliary storage unit 14.

The control unit 11 has one or more arithmetic processing units such as a CPU (Central Processing Unit), an MPU (Micro-Processing Unit) or a GPU (Graphics Processing Unit), and performs various kinds of information processing, control processing and the like by reading a program P stored in the auxiliary storage unit 14 and executing it. The main storage 12 is a temporary storage such as an SRAM (Static Random Access Memory), a DRAM (Dynamic Random Access Memory), a flash memory or the like and temporarily stores data necessary for the control unit 11 to execute arithmetic processing. The communication unit 13 is a communication module for performing processing related to communication, and performs information transmission and reception with external devices.

The auxiliary storage 14 is a nonvolatile storage such as a large-capacity memory, a hard disk or the like, and stores the program P necessary for the control unit 11 to execute processing, as well as other data. Furthermore the auxiliary storage 14 stores a group DB 141 and a speaker DB 142. The group DB 141 is a database storing information on groups of lodging facilities. The speaker DB 142 is a database storing information on the speakers 2 installed in guest rooms of each of the lodging facilities.

The auxiliary storage 14 may be an external storage device connected to the server 1. Moreover, the server 1 may be a multicomputer formed of a plurality of computers or may be a virtual machine virtually constructed by software.

Furthermore, in the present embodiment, the server 1 is not limited to the above-described configuration, but may include an input unit that accepts operation input and a display unit that displays an image, for example. Moreover, the server 1 may be provided with a reading unit that reads a portable storage medium 1a such as a CD (Compact Disk)-ROM or a DVD (Digital Versatile Disc)-ROM, and read the program P from the portable storage medium 1a and execute it. Alternatively, the server 1 may read the program P from a semiconductor memory 1b.

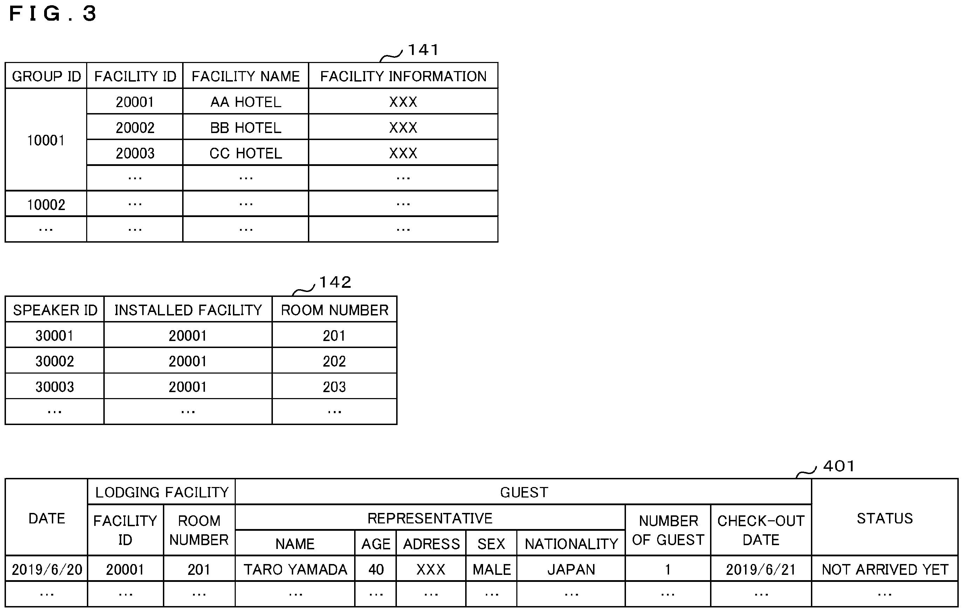

FIG. 3 is an explanatory view illustrating an example of the record layouts of the group DB 141, the speaker DB 142 and the lodging management DB 401.

The group DB 141 includes a group ID column, a facility ID column, a facility name column and a facility information column. The group ID column stores group IDs for identifying groups of lodging facilities. The facility ID column, the facility name column and the facility information column respectively store, in association with the group IDs, facility IDs for identifying lodging facilities belonging to a group, facility names and lodging information on the lodging facilities. The facility information may include information on a lodging plan offered by a lodging facility (lodging charge, grade of a guest room and with or without meals, for example), information on the neighboring region of the lodging facility (facilities located nearby, transportation, tourist attractions and the like) other than basic information such as a location of a lodging facility, facilities within the lodging facility (guest rooms, restaurants, for example).

The speaker DB 142 includes a speaker ID column, an installed facility column and a room number column. The speaker ID column stores speaker IDs for identifying speakers 2. The installed facility column and the room number column respectively store a facility ID of the lodging facility and a room number of the guest room where the speaker 2 is installed.

The lodging management DB 401 includes a date column, a lodging facility column, a guest column and a status column. The date column stores dates. The lodging facility column, the guest column and the status column respectively store, in association with each of the dates, the facility ID and the room number of the lodging facility where the user stays on that date, the information on the user as a guest (name and attribute information of a representative, the number of guests, scheduled check-out date, for example) and the check-in state.

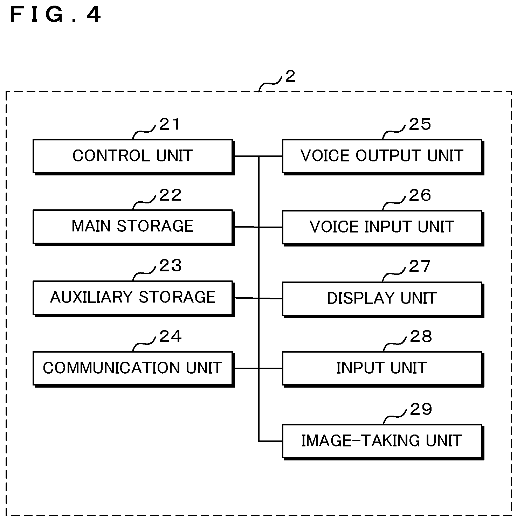

FIG. 4 is a block diagram illustrating an example of the configuration of the speaker 2. The speaker 2 is provided with a control unit 21, a main storage 22, an auxiliary storage 23, a communication unit 24, a voice output unit 25, a voice input unit 26, a display unit 27, an input unit 28 and an image-taking unit 29.

The control unit 21 has an arithmetic processing unit such as a CPU or the like, and performs various kinds of information processing, control processing and the like by reading a program stored in the auxiliary storage 23 and executing the program. The main storage 22 is a temporary storage such as a RAM or the like and temporarily stores data necessary for the control unit 21 to execute arithmetic processing. The auxiliary storage 23 is a non-volatile memory such as a ROM (Read Only Memory) or the like and stores the program necessary for the control unit 21 to execute processing, as well as other data. The communication unit 24 is a communication module for performing processing related to communication and performs information transmission and reception with external devices.

The voice output unit 25 is a speaker for outputting voice and outputs voice provided by the control unit 21. The voice input unit 26 is a microphone for collecting voice and accepts voice input. The display unit 27 is a display screen such as a liquid crystal display or the like and displays an image provided by the control unit 21. The input unit 28 is an operation interface such as a touch panel, a mechanical key or the like and accepts operation input. The image taking unit 29 is a camera provided with an image pickup device such as a CMOS (Complementary Metal Oxide Semiconductor) and performs image taking.

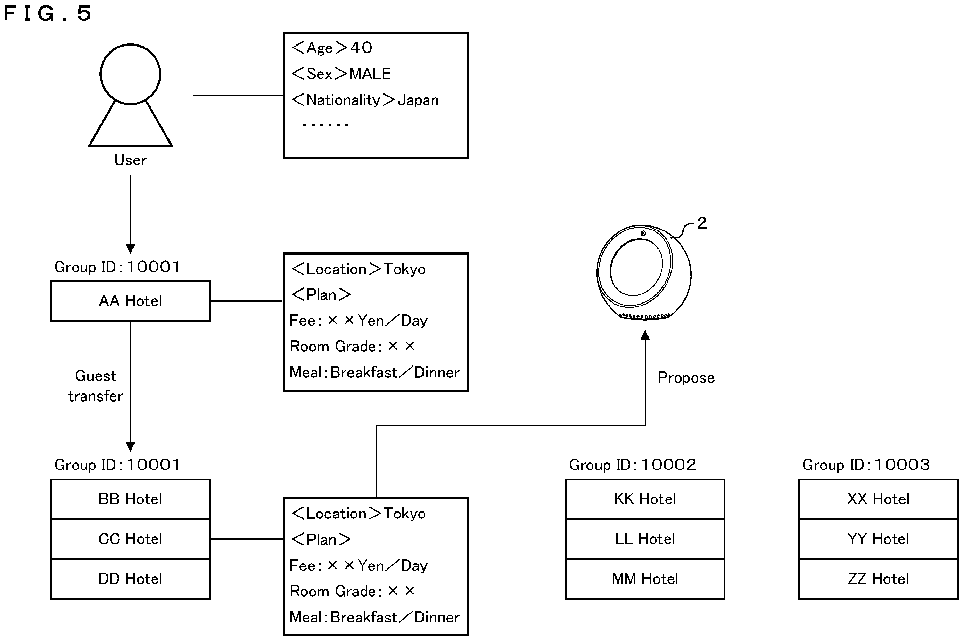

FIG. 5 is an explanatory view illustrating an outline of Embodiment 1. FIG. 5 conceptually illustrates how a guest is transferred between lodging facilities. Based on FIG. 5, the outline of the present embodiment will be described.

For example, the user books a lodging facility through the web site of the lodging facility itself or a web site of a travel agency such as an online travel agent (OTA) or the like via a network N. Note that the booking may be made by any means such as through telephone or at a counter of a physical travel agency. The user stays at the lodging facility where he or she has booked.

The server 1 acquires information used for determining whether or not another lodging facility is to be proposed for the user who is staying at a lodging facility. The information used for determining whether or not another lodging facility is to be proposed is information for judging whether or not information on another lodging facility is to be presented (output) to the user via the speaker 2, for example, information indicating whether or not the user wishes to book a next lodging facility, i. e. the presence or absence of the wish for booking. The server 1 inquires of the user whether or not he or she wishes to book a next lodging facility via the speaker 2. The server 1 accepts input of the user's reply to the inquiry about the presence or absence of a wish for booking.

As described above, the speaker 2 is installed in the guest room of the lodging facility. Note that the installation location of the speaker 2 may be a lobby of the lodging facility, for example, not limited to the guest room. For example, when a user checks in and enters the room, the speaker 2 detects the user who is present around itself. Without regard to the detection means, a user is detected, for example, by image recognition based on an image taken by the image taking unit 29 or by acceptance of an input of a wake word.

Though a series of processing is assumed to be performed when the user enters the guest room (upon check-in) in the present embodiment, the processing may also be performed when the user leaves the room (upon check-out), for example, without being limited to a particular timing.

If detecting the presence of a user, the server 1 outputs a message for inquiry about whether or not the user wishes to book a next lodging facility to the speaker 2 so as to reproduce the message. The speaker 2 accepts a voice input from the user as to whether or not he or she wishes to book a next lodging facility as a reply to the inquiry. The server 1 thus acquires information indicating the presence or absence of a wish for booking. The server 1 determines that another lodging facility is to be proposed if the user wishes to book a next lodging facility.

Though, in the above description, the presence or absence of a wish of the user himself or herself is used as information for determining whether or not another lodging facility is to be proposed, the present embodiment is not limited thereto. The information may also be information on a user's itinerary, for example.

For example, the server 1 previously acquires information on an itinerary (travel duration, travel region, lodging facilities where the user will stay during the travel, the length of the user's stay at each of the lodging facilities and the like) by accepting registration of the schedule from the user. The server 1 then determines whether or not another lodging facility is to be proposed based on the itinerary indicated by the information previously acquired. More specifically, the server 1 compares the length of the user's stay at each of the lodging facilities and the travel duration to determine whether or not there is a period in which a lodging facility has not yet been decided. If determining that there is a period in which a lodging facility has not yet been decided, the server 1 outputs information on another lodging facility as a lodging facility to be stayed during the period.

Moreover, the server 1 may not necessarily be able to acquire as far as the presence or absence of booking of a next lodging facility when determining that another lodging facility is to be proposed. Taking the above-mentioned itinerary as an example, even if the information as far as the lodging facilities the user will stay during the travel cannot be obtained, it is possible to determine whether or not another lodging facility is to be recommended, in the case where the travel duration and regions for the entire trip may be obtained, by determining whether or not the user remains in the same region after checking out the current lodging facility or whether or not the user moves to the next region.

Hence, it is only required for the server 1 to be able to acquire the information used for determining whether or not another lodging facility is to be proposed, and the information is not limited to the information indicating the presence or absence of a wish for booking with a next lodging facility.

Moreover, though inquiry of the user about the presence or absence of a wish for booking is made from the system side in the description above, the user may also actively input a wish for booking of a next lodging facility to the speaker 2 so as to book another lodging facility.

Furthermore, the above-mentioned inquiry and reply need not be input or output by voice but may naturally be performed through screen display or by manual operation.

If determining that another lodging facility is to be proposed, the server 1 specifies a lodging facility where the user is staying based on the speaker ID (identifier) of the speaker 2 from which the reply is obtained with reference to the speaker DB 142. The server 1 then accesses the management server 4 of the specified lodging facility and acquires various information related to the user from the lodging management DB 401. The information acquired here includes the attribute information of the user as a guest other than a lodging plan (information on lodging charges, the grade of the guest room and with or without meals and the like) utilized by the user, for example.

Moreover, the server 1 acquires facility information of lodging facilities affiliated in the present system from the group DB 141. The facility information may include information on lodging plans offered at lodging facilities and on neighboring regions other than the group IDs of the groups to which the lodging facilities belong and the locations of the lodging facilities.

The server 1 extracts another lodging facility to be proposed to the user from the group DB 141 based on the acquired various information. More specifically, the server 1 first performs matching using the group of the lodging facility defined in the group DB 141 as a key and extracts the group for another lodging facility. For example, the server 1 extracts candidates for another lodging facility that belong to the same group as the lodging facility where the user is staying, as described above.

Furthermore, the server 1 performs matching between the attribute information of the user and the facility information (lodging plan, for example) of another lodging facility to extract candidates for another lodging facility. Though the matching method is not limited to a specific method, the server 1 performs collaborative filtering with reference to the lodging management DB 401, for example, to extract a lodging facility utilized by another user who has the attribute information similar to the user. It is noted that having been prepared with a table in which the attribute information is associated with the lodging facility to be proposed in accordance with the attribute information, the server 1 may extract another lodging facility on a content basis, for example.

Moreover, the server 1 may perform matching between the facility information of the lodging facility where the user is staying and the facility information of another lodging facility to thereby extract candidates. For example, the server 1 performs matching based on a lodging plan including a lodging charge or the location of the lodging facility or the like to thereby extract a lodging facility that has a similar plan or is closely located.

Although the matching is performed on a rule basis as described above, having been prepared with a model (neural network, for example) that is trained with the attribute information of the user and the facility information of the lodging facility by machine learning, the server 1 may estimate a lodging facility to be proposed by inputting various information to the model. Hence, it is only required for the server 1 to be able to extract a matched lodging facility based on the attribute information and the facility information, while the specific method is not particularly limited.

The server 1 extracts another lodging facility by using one or more of the above-mentioned matching methods. For example, using all the methods mentioned above, the server 1 extracts another lodging facility that belongs to the same group as that of the lodging facility where the user is staying and that matches in the attribute information of the user and the facility information of the lodging facility where the user is staying. Note that the number of lodging facilities to be extracted may either be one or more than one. It is understood that the server 1 extracts lodging facilities with reference to information on a vacancy status of guest rooms or the like stored in the lodging management DB 401. The server 1 outputs the information on this extracted another lodging facility to the speaker 2 and recommends booking of this lodging facility to the user.

Though the user has a proposition of another lodging facility during his or her stay at one lodging facility in the above description, the present embodiment is not limited thereto. At a timing when the user has finished booking the above-mentioned one lodging facility, the server 1 may propose another lodging facility to the user and recommends booking this lodging facility to the user, for example.

In the case where the user has finished booking a lodging facility through a web site of the lodging facility itself or a web site of a travel agency such as an OTA, for example, an e-mail or SMS (Short Mail Message) informing the completion of the booking attached with a link address is transmitted to the terminal 3. The terminal 3 shifts the screen by performing an operation on the link address and brings up a predetermined chat page (not illustrated). The chat page is a page for having a conversation by means of a chatbot or the like and for booking a next lodging facility.

It is noted that the chatbot is one example of conversation means, and a dedicated operator (person) may have a chat with the user and book a next lodging facility.

The server 1 makes an inquiry to the user via a chat page, checks to see if the user wishes to book a next lodging facility, and outputs the information on another lodging facility. Here, it is natural that matching is performed in accordance with the group of the lodging facility and the lodging facility information as in the above. The terminal 3 displays the information on another lodging facility output from the server 1, accepts input of a booking application and replies to the server 1.

Hence, the server 1 may propose another lodging facility to the user who has finished booking one lodging facility (has already booked but has not stayed yet) as a target instead of the user who is staying.

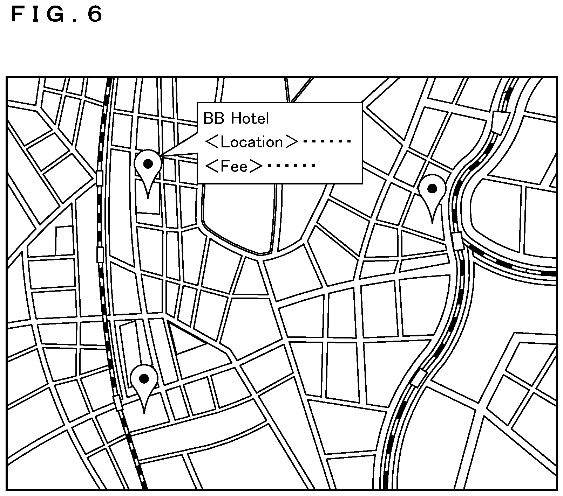

FIG. 6 is an explanatory view illustrating an example of a map image of lodging facilities. In the case where another lodging facility extracted above is proposed to the user, the server 1 generates a map image illustrated in FIG. 6 and displays it on the speaker 2.

The map image is an image for representing the locations of one or more lodging facilities to be proposed to the user on the map and displaying the locations of the lodging facilities with icons. The server 1 generates a map image on which icons are arranged at positions corresponding to the locations of the lodging facilities extracted above with reference to the group DB 141 and outputs the map image to the speaker 2. Thus, the lodging facilities extracted in the above, that is, other lodging facilities that belong to the same group as that of the lodging facility where the user is staying and that match in the attribute information and the facility information are displayed on the map.

The speaker 2 accepts a designation input of another lodging facility to be booked by accepting an operation input of tapping on one of the icons on the map image, for example. Then, the speaker 2 provides guidance on a lodging plan or the like through a screen display and with voice and finally accepts a booking application for the lodging facility. If accepting a booking application via the speaker 2, the server 1 transfers the booking application to the management server 4 of the lodging facility and completes the booking.

It is noted that the server 1 not merely displays the locations of lodging facilities on the map but also displays the lodging facilities with the relative merits in correspondence with the matched results, for example. The server 1 calculates the degree of similarity (cosine similarity, for example) between the lodging plan of the lodging facility where the user is staying and the lodging plan of another lodging facility, and highlights the lodging facility with higher similarity (classification by coloring, for example), for example. Alternatively, the server 1 highlights a lodging facility with high frequency of use by another user who has attribute information similar to the user. This makes it possible to provide reference information as to which lodging facility is to be selected to the user.

From the above, guests can be transferred between lodging facilities according to the present embodiment, and the occupancy rate of the lodging facilities can be improved.

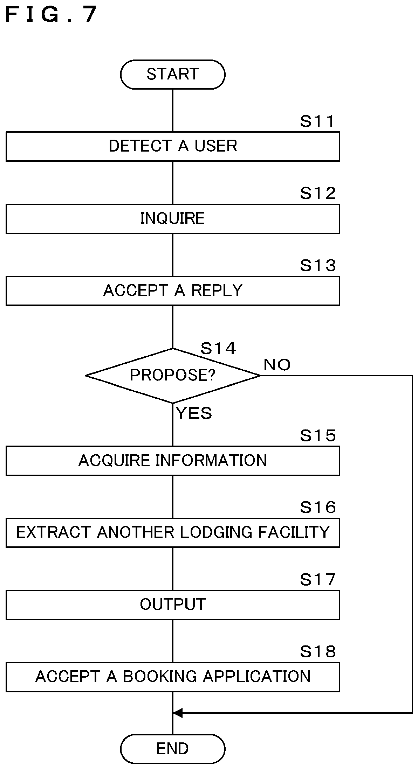

FIG. 7 is a flowchart showing an example of the processing procedure executed by the server 1. Based on FIG. 7, the details of the processing executed by the server 1 will be described.

The control unit 11 of the server 1 detects a user who is present near the speaker 2 (step S11). The control unit 11 outputs voice for inquiring of the user whether or not he or she wishes to book a next lodging facility to the speaker 2 (step S12). The control unit 11 accepts a voice input concerning a reply to the inquiry about the presence or absence of a wish for booking via the speaker 2 (step S13).

The control unit 11 determines whether or not another lodging facility is to be proposed according to the reply accepted at step S13 (step S14). If determining that another lodging facility is not to be proposed (S14: NO), the control unit 11 ends the series of processing.

If determining that another lodging facility is to be proposed (S14: YES), the control unit 11 acquires the attribute information of the user, the facility information of a lodging facility where the user is staying and the facility information of other lodging facilities from the databases (step S15). The control unit 11 extracts another lodging facility to be proposed to the user from the group DB 141 based on the various information acquired at step S15 (step S16). For example, the control unit 11 extracts another lodging facility that belongs to the same group as that of the lodging facility where the user is staying and that matches in the attribute information of the user and the facility information of the facility information where the user is staying.

The control unit 11 outputs the extracted information on the lodging facility to the speaker 2 (step S17). For example, the control unit 11 generates a map image of one or more lodging facilities shown on a map and outputs it to the speaker 2. The control unit 11 accepts a booking application for the lodging facility (step S18) and ends the series of processing.

Though a single lodging facility is booked as a next lodging facility in the above description, multiple lodging facilities may be booked at a time. For example, after having finished booking a lodging facility (second lodging facility) where the user will stay immediately after the lodging facility where the user is staying, the server 1 inquires of the user whether or not he or she wishes to book a further lodging facility (third lodging facility), and proposes a candidate for the further lodging facility if accepting a reply saying that the user wishes for booking. As in the above case, the server 1 extracts a candidate for the third lodging facility based on the group of the lodging facility, the attribute information of the user and the facility information of the lodging facility, etc., generates a map image and outputs it to the speaker 2.

Here, the server 1 preferably accepts input of a destination and extracts a lodging facility at the location that corresponds to the destination as a candidate for the third lodging facility, for example. This makes it possible to extract a lodging facility that suits the itinerary.

Alternatively, the server 1 preferably assigns weights to the facility information of the second lodging facility and extracts a lodging facility close to the second lodging facility as a candidate for the third lodging facility. This enables narrowing of search taking the user's liking into account even more.

Hence, according to Embodiment 1, it is possible to suitably transfer a guest between lodging facilities.

Furthermore, according to Embodiment 1, the lodging facilities have been combined into groups, and another lodging facility is proposed according to the group of the lodging facility where the user is staying (or where the user has already booked), whereby guests can be suitably transferred between the lodging facilities within a group or between groups.

Moreover, according to Embodiment 1, by accepting the presence or absence of a wish for booking from the user, whether or not another lodging facility is to be proposed can suitably be determined.

Additionally, according to Embodiment 1, by accepting the presence or absence of a wish for booking through the user interface (speaker 2) installed in the guest room of the lodging facility, a wish of the user can be informed suitably.

In addition, according to Embodiment 1, the attribute information of the user can suitably be obtained from the lodging management DB 401 based on the identifier (speaker ID) of the user interface installed in the guest room and can be used for extracting a lodging facility.

Furthermore, according to Embodiment 1, booking of a next lodging facility can be recommended at a timing when the user has finished booking a lodging facility through the network N.

Moreover, according to Embodiment 1, whether or not another lodging facility is to be proposed can actively be judged (determined) by not only being informed about a wish of the user, but also taking the user's itinerary into account.

Additionally, according to Embodiment 1, by displaying lodging facilities to be proposed on the map, the user can suitably determine which lodging facility is to be booked.

### Embodiment 2

The present embodiment describes a case where a reward is offered to one lodging facility that transfers a guest to another lodging facility. The details overlapping those of Embodiment 1 are denoted by the same reference codes and descriptions thereof are not repeated.

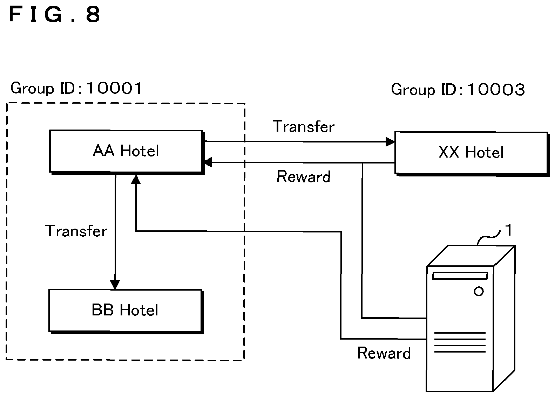

FIG. 8 is an explanatory view illustrating an outline of Embodiment 2. FIG. 8 conceptually illustrates a state in which a reward is offered from another lodging facility that accepts a transferred guest and/or an administrator of the present system to a lodging facility that has transferred the user. In the present embodiment, description is made assuming that a guest can also be transferred between different groups unlike Embodiment 1.

As described in Embodiment 1, the server 1 proposes another lodging facility via the speaker 2, accepts the application and then finishes the booking. Here, if having finished booking of a lodging facility, the server 1 offers information on a reward to the lodging facility where the user is staying. It is noted that the reward may be money, or electronic points or commodities as alternatives to money. Furthermore, the magnitude of a reward (monetary value) is not particularly limited and may be variable depending on lodging facilities that transfer/receive guests, i.e., guest transfer source and/or destination.

In the case where one lodging facility of a source lodging facility and another destination lodging facility belong to different groups, for example, the server 1 offers information on a reward from this another lodging facility and the administrator of the present system to the one lodging facility. In the case where guest transfer is established through the present system for example, the server 1 offers a fixed amount of money as a reward to the source lodging facility. Alternatively, the server 1 outputs to the management server 4 of the booked another lodging facility a payment request to pay a part of the lodging fee (several percent, for example) of this another lodging facility as a guest transfer commission and offers money as a reward to the source lodging facility.

Meanwhile, in the case where one source lodging facility and another destination lodging facility belong to the same group, for example, the server 1 offers information on a reward only from the administrator of the present system. For example, the server 1 offers a fixed amount of money as a reward to the source lodging facility.

Though, in the description above, reward is offered from the destination lodging facility to the source lodging facility only in the case where they belong to different groups, a reward may also be offered from the destination lodging facility even in the case where they belong to the same group. Moreover, while the reward is offered from the system administrator as well in the present embodiment, the reward may be offered only from a lodging facility but not from the system administrator.

Though a series of processing is performed directly after booking of another lodging facility has been finished in the above, the processing may be performed at a timing when the user checks in another lodging facility, or after the user checks out another lodging facility. In other words, it is only required for the server 1 to be able to provide information on a reward at least after booking of another lodging facility has been finished, and the timing is not limited to immediately after completion of the booking.

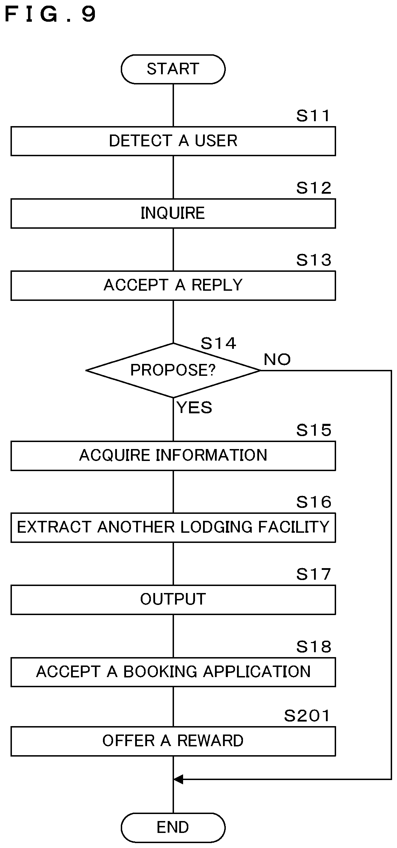

FIG. 9 is a flowchart showing an example of a processing procedure executed by the server 1 according to Embodiment 2. If accepting booking of a lodging facility from the user (step S18), the server 1 executes the following processing.

The control unit 11 of the server 1 offers information on a reward to one source lodging facility from another destination lodging facility and/or the administrator of the present system (step S201). For example, in the case where the source lodging facility and the destination lodging facility belong to different groups, the control unit 11 offers information on a reward from both of the destination lodging facility and the administrator of the present system. Meanwhile, in the case where the source lodging facility and the destination lodging facility belong to the same group, the control unit 11 offers information on a reward only from the administrator of the present system. The control unit 11 ends the series of processing.

According to Embodiment 2, it is possible to provide a lodging facility side with an incentive for transferring a guest, leading to further improvement in the occupancy rate.

It should be considered that the embodiments disclosed this time are illustrative in all aspects and are not limitative. The scope of the present invention is indicated not by the meaning described above but by the claims, and all changes that fall within the meaning equivalent to the claims and the scope are to be embraced.

### [Description of Reference Numerals]

- 1: server (information processing device)
- P: program
- 141: group DB
- 142: speaker DB
- 2: speaker
- 3: terminal
- 4: management server
- 401: lodging management DB

## Claims

1. An information processing device, comprising:
a storage that stores information on a plurality of lodging facilities;
an acquisition unit that acquires, for a user who has already booked one of the lodging facilities or is currently staying at said one of the lodging facilities, information used for determining whether or not another one of the lodging facilities is to be proposed;
a determination unit that determines whether or not said another one of the lodging facilities is to be proposed to the user based on the information acquired; and
an output unit that outputs information on said another one of the lodging facilities different from said one of the lodging facilities with reference to the storage in a case where it is determined that said another lodging facility is to be proposed.

2. The information processing device according to claim 1, wherein
the storage stores information on the lodging facilities combined into predetermined groups, and
the output unit extracts and outputs said another one of the lodging facilities based on one of the groups to which said one of the lodging facilities belongs.

3. The information processing device according to claim 2, wherein the output unit outputs a map image representing a location of said another one of the lodging facilities on a map.

4. The information processing device according to any one of claims 1 to 3, wherein
the acquisition unit acquires information indicating a presence or an absence of a wish for booking from the user for a next one of the lodging facilities as information to be used for determining whether or not said another one of the lodging facilities is to be proposed, and
the determination unit determines whether or not said another one of the lodging facilities is to be proposed according to the presence or absence of a wish for booking.

5. The information processing device according to claim 4, wherein the acquisition unit acquires the information indicating a presence or an absence of a wish for booking from a user interface installed in a guest room of said one of the lodging facilities.

6. The information processing device according to claim 5, wherein the acquisition unit that acquires the information indicating a presence or an absence of a wish for booking and an identifier of the user interface through the user interface,
a second acquisition unit that acquires attribute information of the user associated with the guest room based on the identifier with reference to a database storing information on the user associated with the guest room, and
the output unit extracts and outputs said another one of the lodging facilities based on the attribute information.

7. The information processing device according to claim 5 or 6, wherein the acquisition unit, in a case where the user has finished booking said one of the lodging facilities through a network, acquires the information indicating a presence or an absence of a wish for booking a next one of the lodging facilities from the user as information used for determining whether or not said another one of the lodging facilities is to be proposed.

8. The information processing device according to any one of claims 1 to 7, wherein
the acquisition unit acquires information indicating an itinerary for the user as information used for determining whether or not said another one of the lodging facilities is to be proposed, and
the determination unit determines whether or not said another one of the lodging facilities is to be proposed to the user according to the itinerary.

9. The information processing device according to any one of claims 1 to 8, further comprising:
an acceptance unit that accepts an application for booking said another one of the lodging facilities; and
a provision unit that provides information on a reward from said another one of the lodging facilities to said one of the lodging facilities in a case where booking of said another one of the lodging facilities is completed.

10. The information processing device according to any one of 1 to 9, wherein
the output unit extracts and outputs said another one of the lodging facilities according to information on said one of the lodging facilities where the user has already booked or where the user is currently staying.

11. An information processing method causing a computer to execute processing of
acquiring, for a user who has already booked one lodging facility or is currently staying at the one lodging facility, information used for determining whether or not another lodging facility is to be proposed;
determining whether or not said another lodging facility is to be proposed to the user based on the information acquired; and
outputting information on said another lodging facility different from said one lodging facility with reference to a storage storing information on a plurality of lodging facilities in a case where it is determined that said another lodging facility is to be proposed.

12. A program causing a computer to execute processing of:
acquiring, for a user who has already booked one lodging facility or is currently staying at the one lodging facility, information used for determining whether or not another lodging facility is to be proposed;
determining whether or not said another lodging facility is to be proposed to the user based on the information acquired; and
outputting information on said another lodging facility different from said one lodging facility with reference to a storage storing information on a plurality of lodging facilities in a case where it is determined that said another lodging facility is to be proposed.
